# EUROPEAN PATENT APPLICATION

(11) **EP 2 372 664 A1**
(43) Date of publication of application: **05.10.2011**
(21) Application number: 11160036.7
(22) Date of filing: 28.03.2011
(51) Int. Cl.: G07D 11/00

(54) **Method for replenishing cash recycler**

(30) Priority: 01.04.2010 SE 1050319
(71) Applicant: SCAN COIN AB, S-213 75 Malmö (SE)
(72) Inventor: Sjöström, Anders, SE-222 29, LUND (SE); Aas, Per Christian, NO-0198, OSLO (NO); Krykorka, Nico, DE-65589, STEINBACH (DE)
(74) Representative: Bergstrand, Mikael Gudmundsson

(57) **Abstract**

The present invention is related to a method for supplementing cash in a cash recycler located at a point of sales at a store, wherein the cash recycler being arranged to receive and dispense cash, comprises registering, at the cash recycler, cash information relating to the receiving and dispensing of cash at the cash recycler, and determining a cash supplementing amount based on the cash information registered by the cash recycler. Further, the method comprises transferring a cash request to a cash dispenser located at the store, the cash request includes data representing said cash supplementing amount and the identity of the cash recycler related to the cash supplementing amount, receiving at a cash request processing device of said cash dispenser data of the cash request, dispensing cash at the cash dispenser based on the processed data of the cash request, delivering the dispensed cash from the cash dispenser to the cash recycler at the point of sales, supplementing the cash recycler using said delivered cash, and verifying the amount of cash supplemented to the cash recycler.

## Description

### Technical Field of Invention

The present invention relates to a method for replenishing a cash recycler at a point of sales.

### Background to the Invention

It is common that a cashier, teller or checkout assistant at a point of sales in a shop run low on particular denominations of the cash handled at the point of sales. The replenishing of the cash of a cash register or a cash recycler is quite cumbersome. The person at the point of sales have to call someone to provide additional cash or leave the point of sales themselves for retrieving cash for replenishing. Hence, the way the replenishing of cash at the point of sales is performed today is ineffective and may in many cases result in that the person at the point of sales becomes less focused on the customer and thereby provide decreased service to the customers.

Moreover, today the handling of cash for replenishing is a security hazard. There is the risk of being attacked and robbed when carrying the cash from a cash dispensing device to the cash recycler and there is a risk of the persons carrying the cash not being entirely honest and keeping some of the cash for themselves.

### Summary of the Invention

It is an object of the invention to facilitate replenishing of cash recyclers at the point of sales.

This object is achieved by means of a method for supplementing cash in a cash recycler located at a point of sales at a store according to claim 1. Further embodiments of the invention are disclosed in the dependent claims.

In particular, according to a first embodiment of the invention, the method for supplementing cash in a cash recycler located at a point of sales at a store, wherein the cash recycler being arranged to receive and dispense cash, comprises registering, at the cash recycler, cash information relating to the receiving and dispensing of cash at the cash recycler, and determining a cash supplementing amount based on the cash information registered by the cash recycler. Further, the method comprises transferring a cash request to a cash dispenser located at the store, the cash request includes data representing said cash supplementing amount and the identity of the cash recycler related to the cash supplementing amount, receiving at a cash request processing device of said cash dispenser data of the cash request, dispensing cash at the cash dispenser based on the processed data of the cash request, delivering the dispensed cash from the cash dispenser to the cash recycler at the point of sales, supplementing the cash recycler using said delivered cash, and registering the amount of cash supplemented to the cash recycler. This method is advantageous in that the replenishing is significantly simplified by using information from the cash recycler relating to the cash flow and, thus, the amount required for an replenishing action. The method is further advantageous in that information needed for replenishing is collected in a cash request for the cash dispenser to read and act upon.

According to another embodiment the act of determining a cash supplementing amount is performed at the point of sales and wherein the transferring of a cash request is initiated at the point of sales.

In another embodiment said determining a cash supplementing amount includes continously generating a balance value by balancing the amount of cash received and dispensed at the cash recycler, continuously comparing the balance value with a cash threshold value, and generating a cash supplementing amount in case of the balance value is below the cash threshold value.

In yet another embodiment the act of registering cash information includes registering cash information separately for each of a plurality of denominations received and dispensed at the cash recycler. The advantage of this embodiment that the time between replenishing may be optimized as the replenishing may be tailored to the actual status instead of a statistical value.

In another embodiment the act of determining a cash supplementing amount further includes determining the number of items of each denomination registered that are to be included in said supplementing amount.

According to one embodiment the act of dispensing cash at the cash dispenser further includes the act of dispensing a specified number of items from specified denominations, wherein the specified number of items for a specified denomination is received in the cash request.

In a further embodiment the transferring of a cash request is performed over a computer network.

In one embodiment the method further comprising writing, at the point of sales, the determined cash supplementing amount as a cash request on a physical media, and reading, at the cash dispenser, the physical media inputting the data of the cash request into the cash dispenser, wherein said act of transferring a cash request includes delivering said physical media from the point of sales to the cash dispenser.

In yet another embodiment said writing the cash request on a physical media includes printing said cash request on a physical media, and wherein said reading of the physical media includes scanning the cash request printed on the physical media.

According to another embodiment the cash request is represented by a barcode on the physical media.

In one embodiment said act of dispensing includes placing a cash transport unit at a dispensing interface in the cash dispenser, and dispensing the requested cash into the cash transport unit, and wherein act of supplementing the cash recycler includes unlocking the cash transport unit at the point of sales, and extracting the cash from the cash transport unit.

In yet another embodiment said act of dispensing includes docking a cash transport unit at a dispensing interface in the cash dispenser, and dispensing the requested cash into the cash transport unit, and wherein said act of supplementing the cash recycler includes docking the cash transport unit at the point of sales, and transferring the cash from the cash transport unit to the cash recycler.

According another embodiment the cash requested and delivered includes coins.

### Brief Description of the Drawings

The invention will now be described in further detail by way of example under reference to the accompanying drawings, in which:
Fig 1 is a schematic view showing a store implementing one embodiment of the invention,
Fig 2 is a schematic block diagram showing a cash recycler for a point of sales according to one embodiment of the invention,
Fig 3 is a schematic block diagram showing a cash dispenser for a cash managing location according to one embodiment of the invention,
Fig 4 is a flowchart of a method for replenishing a cash recycler according to one embodiment of the invention, and
Fig 5 is a flowchart of a method for replenishing a cash recycler according to another embodiment of the invention.

### Detailed Description of a Preferred Embodiment

The present invention will now be described more fully hereinafter with reference to the accompanying drawings, in which certain embodiments are shown. Like numbers refer to like elements throughout.

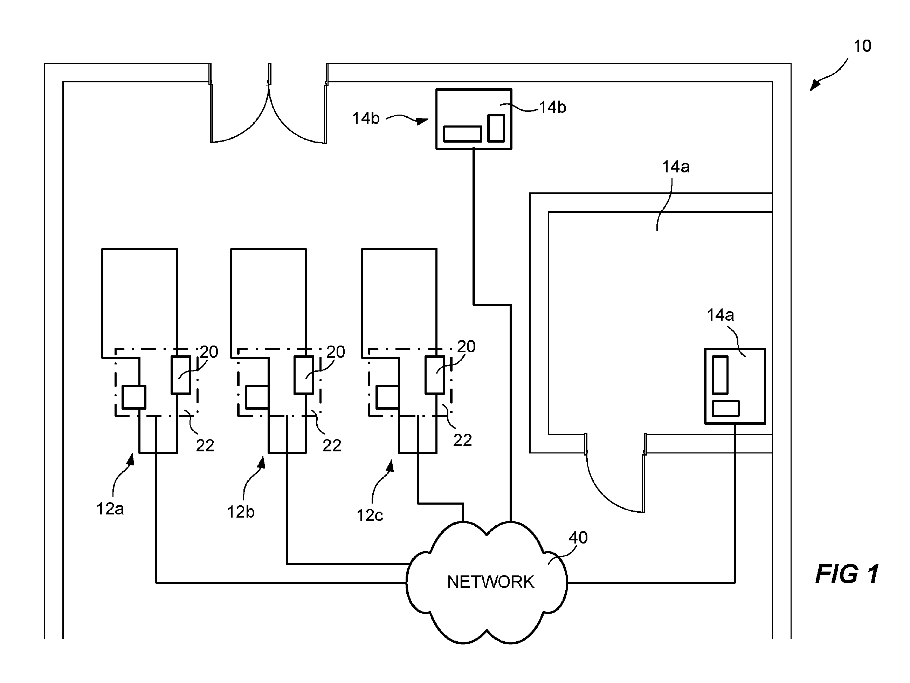

The invention relates to a method for supplementing or replenishing cash in a cash recycler. Now referring to Fig 1, according to one embodiment of the invention a system used in the invention may be arranged in a store 10. In view of the present invention and throughout the present specification and claims the term store should be interpreted as a local site including spaces used by the people working at the store and, if applicable, for storing goods or, in other words, all local rooms and spaces belonging to the business or establishment. Some examples, not exhaustive, of possible stores are a regular shop, a retail store, a shopping center, restaurants, gas stations, airports, ticket offices, coffee shops etc. In a store there is arranged at least one point of sales 12a-c and at least one cash managing location 14a-b. At a point of sales 12a-c there is provided a cash recycler 20 which either is included in or combined with a checkout system 22 keeping track of transactions. The cash managing location 14a-b includes a cash dispenser 30. The cash dispenser 30 may be a device specialized for dispensing of cash, a device specialized for dispensing of coins, a device specialized for dispensing of notes, a cash recycler, for coins, notes or both coins and notes, a Teller Cash Recycler (TCR), a Coin Dispense System (CDS), a Retail Cash System (RCS), etc.

According to one embodiment the cash recycler 20 is connected to a computer network 40 either directly or via the checkout system 22. The cash dispenser 30 is connected to the same computer network 40. The connection to the network may be of any known type.

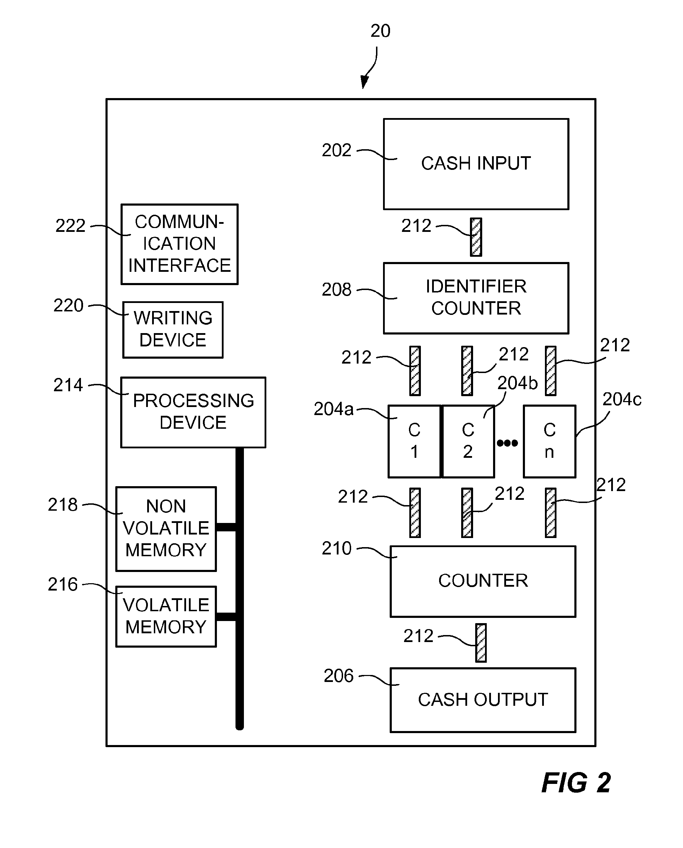

Fig 2 depicts one embodiment of the cash recycler 20 provided at the point of sales. The cash recycler 20 may be any known cash recycler enable to receive, identify, count, store, and dispense cash, e.g. the cash recycler may be based on a cash recycler like the one described in US patent 7 066 335, by Aas et al or a cash recycler like the one sold under the name of Cash Complete by Scan Coin AB, Jägershillgatan 26, 213 75 Malmö, Sweden.

The cash recycler 20 of Fig 2 shows the features of the cash recycler that are of interest for the understanding of the present invention. The cash recycler includes a cash input 202, cash storage devices, 204a-c, for different denominations C₁₋ₙ, cash output 206, cash identifier and counter 208 for cash input, counter for cash 210 output, and cash transport channels 212. Further, the cash recycler 20 includes a processing device 214, e.g. a central processing unit (CPU), a volatile memory 216 for temporary storage and a non-volatile memory 218, e.g. for storing program code and persistent variables and values. The cash recycler may further include a writing device 220 or a communication interface 222 or both. The cash received in the cash input 202 is identified as valid and as a specific denomination and is counted at the identifier/counter 208.The cash is then sorted into a cash storage device 204a-c corresponding to the identified denomination. Cash to be dispensed is retrieved from the cash storage devices 204a-c is either counted on its way to the output or registered when requested and then dispensed. The cash recycler 20 is arranged to keep track of the number of cash items of each denomination of in the cash storage devices 204a-c. This functionality may be implemented by firmware running on the processing device 214.

The writing device 220 may be a printer arranged to be controlled by the processing unit 214 in order to print cash requests to a printable media. Alternatively the writing device may be arranged to punching the cash request into cards, writing the cash request to a magnetic card, an electronic memory device, a magnetic disk, a hard drive, a floppy disk, an optical disk, etc. Examples of electronic memories are a Flash memory, a RAM, PROM, an EPROM, an EEPROM, etc.

The communication interface 222 may be any general type of communications device enabled to send messages to other devices, in particular sending cash requests to a cash dispenser. The hardware for the communications device may be arranged as a fixed part of the system or as a detachable module. Examples of various possible communications to be implemented are presented below.

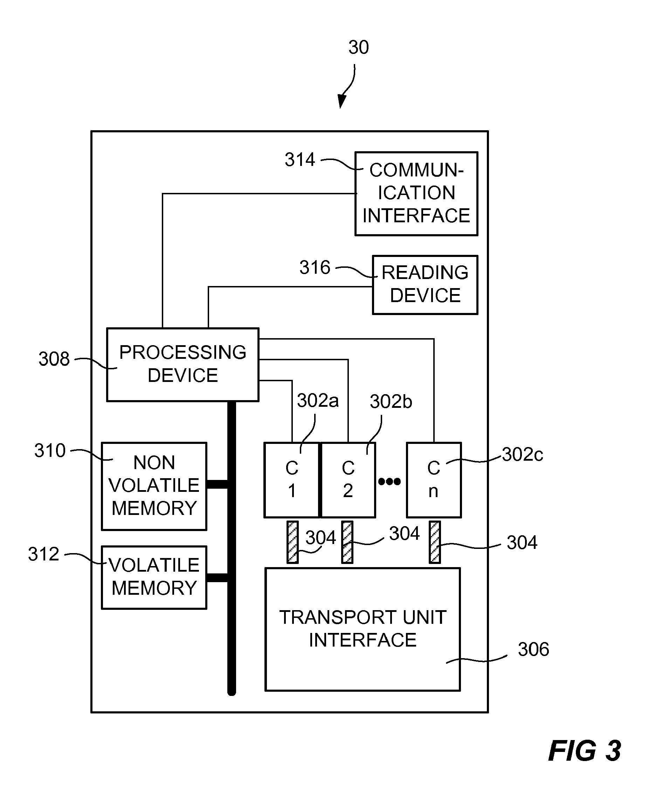

In Fig 3 one embodiment of a cash dispenser 30 is shown. The cash dispense includes cash storage devices 302a-c. The cash storage devices may be loaded by feeding each storage device 302a-c specifically with cash having correct denomination C₁₋ₙ or the cash dispenser may also function as a cash recycler and including a cash input and other features necessary for such functionality. Features relating to cash input are not shown. Further, the dispenser includes cash transport channels 304 for transporting requested cash to a transport unit interface 306 arranged to receive a cash transport unit for loading. The output of cash from the cash storage devices 302a-c is controlled by a processing device 308 running software from a non-volatile memory 310. The processing device may also be connected to a volatile memory 312.

Moreover, the cash dispenser 30 includes a communication interface 314 connecting it to a network for receiving cash requests from cash recyclers at points of sales, it includes a reading device 316, e.g. a scanner, for reading cash requests delivered on a physical media, or it includes both.

The communication interface 314 may be a general network card, but may also be any type of communications device enabled to receive messages to other devices. Examples of various possible communications are presented below.

The reading device 316 may be a scanner, as previously mentioned. The reading device 316 may be arranged to be controlled by the processing unit 214 in order to read cash requests of a printable media. Alternatively the reading device may be arranged to read cash requests punched into cards, written to a magnetic card, an electronic memory device, a magnetic disk, a hard drive, a floppy disk, an optical disk, etc. Examples of electronic memories are a Flash memory, a RAM, PROM, an EPROM, an EEPROM, etc.

The cash dispenser 30 may be based on a coin dispensing apparatus as the one described in the international application WO 2008/024043, a SCAN COIN Retail Cash System (RCS 800) from Scan Coin AB, Jägershillgatan 26, 213 75 Malmö, Sweden, or a known cash recycler.

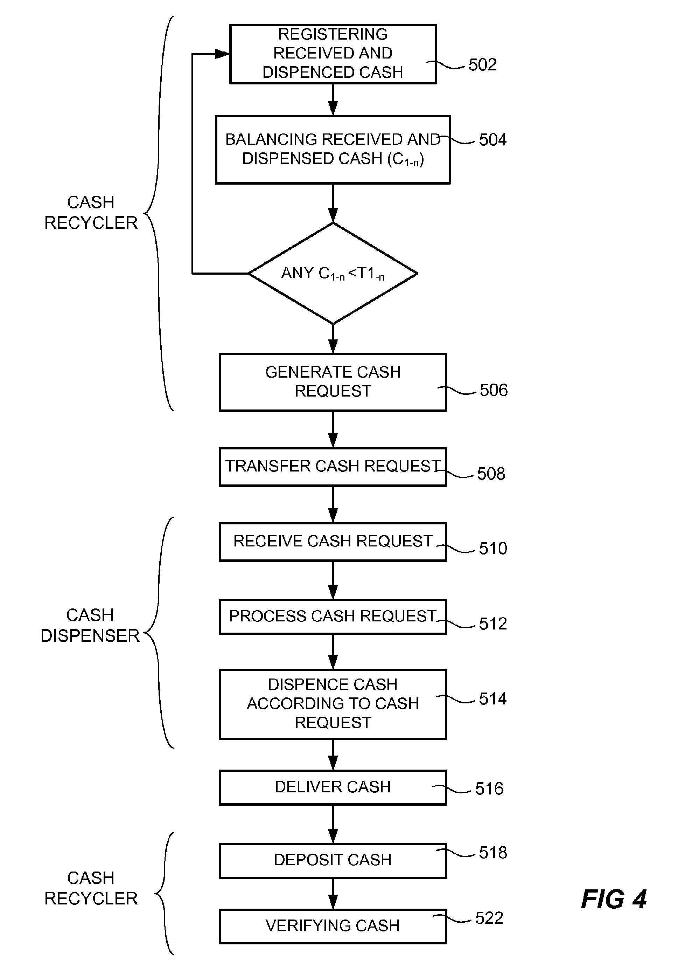

According to one embodiment of the invention a method for supplementing cash of the cash recycler includes the process steps of Fig 4.

The cash recycler register the number of items of a specific denomination that is received and dispensed, step 502. This may be performed for a plurality of different denominations of the cash handled by the cash recycler. The denominations monitored are referred to as the monitored denominations below.

The amount of each of the monitored denominations that is received and dispensed is continuously balanced for, step 504. The balancing results in a momentary value for each monitored denomination, C₁₋ₙ, representing the amount of cash present in the cash recycler, step 504. The momentary values, C₁₋ₙ, may be continuously compared with preset threshold values T₁₋ₙ, and If one of the monitored denominations, C₁₋ₙ, in the cash recycler falls below the threshold, T₁₋ₙ, the cash recycler need to be replenished and a cash request is either automatically generated or manually generated, step 506. The manual generation may be in response to a presentation of an indicator of the need to replenish at the point of sales.

The generation of a cash request may include creating an electronic message including data representing the amount of each of the monitored denominations, C₁₋ₙ, and data representing the unique identity of the cash recycler. Hence, the cash request includes a cash structure indicating the amount/number of each of the monitored denominations.

The cash request is transferred, step 508, from the cash recycler via the computer network to the cash dispenser at the cash managing location, where it is received, step 510, and processed, step 512, by the cash dispenser. The cash dispenser dispenses the requested amount of each of the requested denominations into a transport unit and provides the identity of the cash recycler, step 514. Then the dispensed cash is delivered to the point of sales and the cash recycler from which the request originated, step 516. At the point of sales the delivered cash is deposited in the cash recycler, step 518. The deposit of the cash into the cash recycler may be performed by manually feeding the cash into the cash recycling system by connecting the transport unit directly to the cash recycler for automating depositing. During the deposit or when the deposit is finished a system employing automatic depositing of the cash may be arranged to verify, step 522, the deposited amount of cash by comparing the amount requested in the cash request with the actual amount deposited. In a system not including any technical system for counting the amount of cash deposited the person depositing may be requested to verify, step 522, the amount deposited by typing the amount and signing.

The cash requests described above may be transferred in a plurality of different ways. The transfer method implemented may be any type of network enabling transfer of data from one point to another and it may be based on any known transmission technology. For instance the transmission method may include wired communication or wireless communication, e.g. a direct link, WiFi, Ethernet, power line communication, optical cable, Blue Tooth, Infra red, Radio frequency, etc.

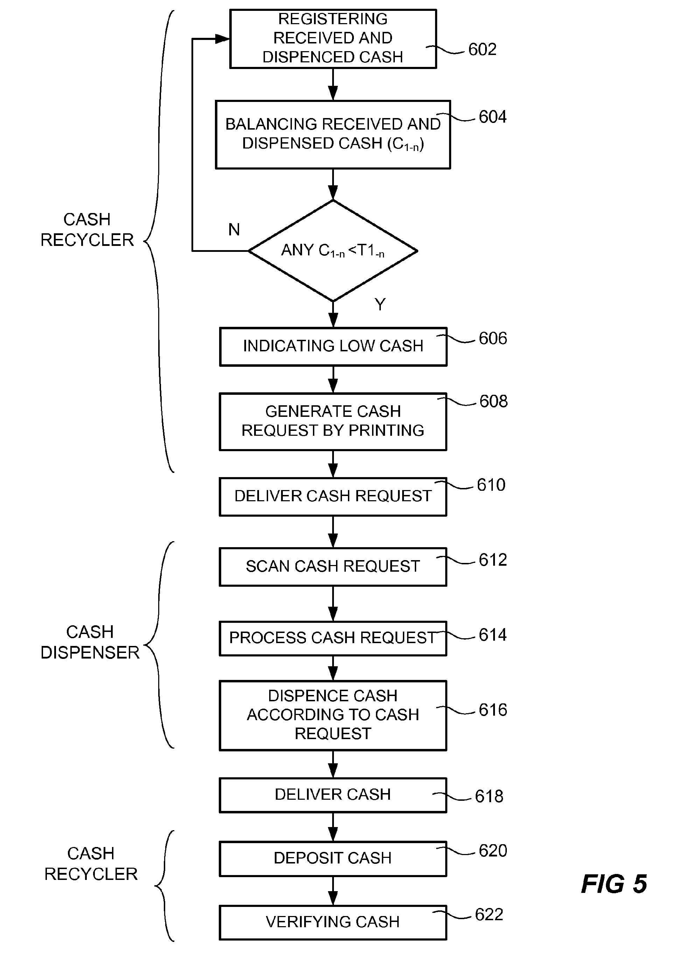

According to another embodiment of the present invention a method for supplementing cash of the cash recycler includes the process steps of Fig 5.

The cash recycler register the number of items of a specific denomination that is received and dispensed, step 602. This may be performed for a plurality of different denominations of the cash handled by the cash recycler.

The amount of each of the monitored denominations that is received and dispensed is continuously balanced, step 604, in order to keep track of the number of items relating to each denomination. The balancing results in a momentary value for each monitored denomination, C₁₋ₙ, representing the amount of cash present in the cash recycler. The momentary values, C₁₋ₙ, may be continuously compared with preset threshold values T₁₋ₙ, and If one of the monitored denominations, C₁₋ₙ, in the cash recycler falls below the threshold, T₁₋ₙ, the cash recycler need to be replenished and an indication of a low level of a denomination may be presented at the cash recycler, step 606 . In response to the indication of shortage of one or a plurality of denominations a cash request is manually generated, step 608. A cash request may be generated even if no denomination of the monitored denominations is below the threshold.

The generation of a cash request includes printing data representing the amount of each of the monitored denominations, C₁₋ₙ, and data representing the unique identity of the cash recycler onto a physical media, e.g. a paper, a sheet of plastic or of any other printable media. Hence, the cash request includes a cash structure indicating the amount/number of each of the monitored denominations. This cash structure may be printed in plain text, coded text, i.e. character based code, as a linear barcode, as a matrix barcode, etc.

Then the cash request is delivered from the cash recycler to the cash dispenser at the cash managing location, step 610, possibly by having someone carrying the physical media. At the cash dispenser the physical media is, according to this particular embodiment, scanned and thereby converted to an electronic form, step 612, for processing, step 614, by the cash dispenser. The cash dispenser dispenses the requested amount of each of the requested denominations, in accordance with the cash structure of the cash request, into a transport unit and provides the identity of the cash recycler, step 616. Then the dispensed cash is delivered to the point of sales and the cash recycler from which the request originated, step 618. At the point of sales the delivered cash is deposited in the cash recycler, step 620. The deposit of the cash into the cash recycler may be performed by manually feeding the cash into the cash recycling system or by connecting the transport unit directly to the cash recycler for automatic depositing. During the deposit or when the deposit is finished a system employing automatic depositing of the cash may be arranged to verify, step 622, the deposited amount of cash by comparing the amount requested in the cash request with the actual amount deposited. In a system not including any technical system for counting the amount of cash deposited the person depositing may be requested to verify, step 622, the amount deposited by typing the amount and signing.

According to yet another embodiment the printing of the cash request onto a physical media may be replaced by any one of the following methods: punching the cash request into cards, writing the cash request to a magnetic card, an electronic memory device, a magnetic disk, a hard drive, a floppy disk, an optical disk, etc. Examples of electronic memories are a Flash memory, a RAM, PROM, an EPROM, an EEPROM, etc. Then depending on which of the methods used for the cash request a corresponding method for reading the request is implemented at the cash dispenser.

In the embodiment including printing barcodes on a printable media any barcode may be used. For instance, a linear barcode or a matrix barcode may be used. A linear barcode may be U.P.C., Codabar, Code 25 - Non-interleaved 2 of 5, Code 25 - Interleaved 2 of 5, Code 39, Code 93, Code 128, Code 128A, Code 128B, Code 128C, Code 11, CPC Binary, DUN 14, EAN 2, EAN 5, EAN 8, EAN 13, Facing Identification Mark, GS1-128 (formerly known as UCC/EAN-128), incorrectly referenced as EAN 128 and UCC 128, GS1 DataBar formerly Reduced Space Symbology (RSS), HIBC (HIBCC Bar Code Standard), ITF-14, Latent image barcode, Pharmacode, Plessey, PLANET, POSTNET, Intelligent Mail Barcode, MSI, PostBar, RM4SCC / KIX, JAN, Telepen, etc. A matrix barcode may be 3-DI, ArrayTag, Aztec Code, Small Aztec Code, Chromatic Alphabet, Chromocode, Codablock, Code 1, Code 16K, Code 49, ColorCode, Compact Matrix Code, CP Code, CyberCode, d-touch, DataGlyphs, Datamatrix, Datastrip Code, Dot Code A, EZcode, Grid Matrix Code, High Capacity Color Barcode, HueCode, INTACTA.CODE, InterCode, MaxiCode, mCode, MiniCode, Micro PDF417, MMCC, Optar, PaperDisk, PDF417, PDMark, QR Code, QuickMark Code, Semacode, SmartCode, Snowflake Code, ShotCode, SuperCode, Trillcode, UltraCode, UnisCode, VeriCode, VSCode, WaterCode, etc.

The dispensing of cash, 514, 616, delivering of cash, 516, 618, and depositing of cash, 518, 620, may be performed in a plurality of ways and independently of whether the method showed in Fig 4 or the method showed in Fig 5 is used.

According to one embodiment, the cash is dispensed by the dispenser into a coin bag or any other simple carrying device for delivery. When the person delivering the cash reaches the cash recycler at the point of sales the cash may be either manually put in to a cash drawer or manually fed in to the system at the pos by dropping/depositing the cash into the cash input of the cash recycler. The advantage of feeding the cash into the cash input of the cash recycler is that the cash recycler is able to count the deposited cash and thereby provide non-tampered data regarding the amount of cash really deposited to the system at the point of sales.

According to another embodiment, the cash is dispensed into a closed and secure transport unit when the transport unit is docked to the dispenser. Thereby there should be no opportunity for a person to take cash dispensed in accordance with the cash request. Thus the interface between the cash dispenser and the transport unit should not be possible to tamper. Then at the cash recycler a similar docking of the transport unit is performed. Accordingly it would not be possible to remove any cash from the path between the cash dispenser and the cash recycler.

Further, the transport unit of this embodiment may include a memory accessible by the cash dispenser and the cash recycler, e.g. via wireless data transmission or electrical connections in the transport unit, the cash dispenser, and the cash recycler. Then the cash dispenser may write the amount of cash dispensed into the memory of the transport unit and then may the information may be read and verified at the cash recycler. According to an alternative embodiment the cash dispenser sends an identifier identifying the transport unit or the person carrying it together with information of the amount dispensed to the cash recycler via a network connection. Then the cash recycler identifies the transport unit or the person carrying the transport unit when depositing the cash at the cash recycler and is thereby able to verify the replenishing by comparing the amount deposited by the transport unit with the information sent via the network.

## Claims

1. Method for supplementing cash in a cash recycler located at a point of sales at a store, the cash recycler being arranged to receive and dispense cash, said method comprising:
registering, at the cash recycler, cash information relating to the receiving and dispensing of cash at the cash recycler,
determining a cash supplementing amount based on the cash information registered by the cash recycler,
transferring a cash request to a cash dispenser located at the store, the cash request includes data representing said cash supplementing amount and the identity of the cash recycler related to the cash supplementing amount,
receiving at a cash request processing device of said cash dispenser data of the cash request,
dispensing cash at the cash dispenser based on processed data of the cash request,
delivering the dispensed cash from the cash dispenser to the cash recycler at the point of sales,
supplementing the cash recycler using said delivered cash, and
verifying the amount of cash supplemented to the cash recycler.

2. Method according to claim 1, wherein the act of determining a cash supplementing amount is performed at the point of sales and wherein the transferring of a cash request is initiated at the point of sales.

3. Method according to any one of claims 1-2, wherein said determining a cash supplementing amount includes:
continously generating a balance value by balancing the amount of cash received and dispensed at the cash recycler,
continuously comparing the balance value with a cash threshold value, and
generating a cash supplementing amount in case of the balance value is below the cash threshold value.

4. Method according to any one of claims 1-3, wherein the act of registering cash information includes registering cash information separately for each of a plurality of denominations received and dispensed at the cash recycler.

5. Method according to claim 4, wherein the act of determining a cash supplementing amount further includes determining the number of items of each denomination registered that are to be included in said supplementing amount.

6. Method according to any one of claims 4-5, wherein the act of dispensing cash at the cash dispenser further includes the act of dispensing a specified number of items from specified denominations, wherein the specified number of items for a specified denomination is received in the cash request.

7. Method according to any one of claims 1-6, wherein the transferring of a cash request is performed over a computer network.

8. Method according to any one of claims 1-6, further comprising writing, at the point of sales, the determined cash supplementing amount as a cash request on a physical media, and reading, at the cash dispenser, the physical media inputting the data of the cash request into the cash dispenser, wherein said act of transferring a cash request includes delivering said physical media from the point of sales to the cash dispenser.

9. Method according to claim 8, wherein said writing the cash request on a physical media includes printing said cash request on a physical media, and wherein said reading of the physical media includes scanning the cash request printed on the physical media.

10. Method according to claim 9, wherein the cash request is represented by a barcode on the physical media.

11. Method according to any one of claims 1-10, wherein said act of dispensing includes:
placing a cash transport unit at a dispensing interface in the cash dispenser, and
dispensing the requested cash into the cash transport unit,
and wherein said act of supplementing the cash recycler includes:
unlocking the cash transport unit at the point of sales, and
extracting the cash from the cash transport unit.

12. Method according to any one of claims 1-10, wherein said act of dispensing includes:
docking a cash transport unit at a dispensing interface in the cash dispenser, and
dispensing the requested cash into the cash transport unit,
and wherein said act of supplementing the cash recycler includes:
docking the cash transport unit at the point of sales, and
transferring the cash from the cash transport unit to the cash recycler.

13. Method according to any one of claims 1-12, wherein the cash requested and delivered includes coins.

14. Method according to any one of claims 11 or 12, wherein the cash transport unit includes a memory accessible by the cash dispenser and the cash recycler, for example via wireless data transmission or electrical connections in the cash transport unit , the cash dispenser , and the cash recycler, and wherein the cash dispenser writes the amount of cash dispensed in the memory of the cash transport unit, and wherein this information is read and verified at the cash recycler.

15. Method according to any one of claims 11 or 12, wherein the cash dispenser sends an identifier identifying the cash transport unit or the person carrying it together with information of the amount dispensed to the cash recycler via a network connection, after which the cash recycler identifies the cash transport unit or the person carrying the cash transport unit when depositing the cash at the cash recycler, and is thereby able to verify the replenishing by comparing the amount deposited by the cash transport unit with the information sent via the network.
